# EUROPEAN PATENT APPLICATION

(11) **EP 4 439 745 A1**
(43) Date of publication of application: **02.10.2024**
(21) Application number: 22902750.3
(22) Date of filing: 10.06.2022
(51) Int. Cl.: H01M 8/18

(54) **AMINE-BROMINE TWO-ELECTRON ELECTROLYTE OF FLOW BATTERY AND USE THEREOF, AND FLOW BATTERY**

(30) Priority: 06.12.2021 CN 202111481099
(71) Applicant: Dalian Institute Of Chemical Physics, Chinese Academy Of Sciences, Liaoning 116023 (CN)
(72) Inventor: LI, Xianfeng, Dalian, Liaoning 116023 (CN); XU, Yue, Dalian, Liaoning 116023 (CN); XIE, Congxin, Dalian, Liaoning 116023 (CN)
(74) Representative: Bayramoglu et al.
(86) International application number: PCT/CN2022/098184
(87) International publication number: WO 2023/103312

(57) **Abstract**

The present invention discloses an amine-bromine two electron electrolyte of flow battery and the use thereof, and a flow battery, which belong to the field of flow battery. In the electrolyte, an amino compound with an electron-withdrawing group at the ortho-position of an amino group is used to react with bromine charged to a positive valence so as to form an amine-bromine compound, such that positive-valence bromine is stabilized, and a reversible two-electron transfer reaction from bromine ions to amino compounds is achieved. The amine compounds have different solubilities and produce different voltages depending on their substituent groups, and thus have extensive adjustability and applicability for use in acidic, neutral, and weak alkaline flow battery systems. Flow batteries assembled with the electrolyte prepared using this reaction has the advantages of low cost and high energy density, and can achieve a longer cycle life and higher battery efficiency.

## Description

### TECHNICAL FIELD

The present application relates to a flow battery electrolyte, specifically to an amine-bromine two electron electrolyte of flow battery and use thereof, and a flow battery the field of multi-electron transfer aqueous iodine-based battery, which belongs to the field of flow battery.

### BACKGROUND

Renewable energy sources occupy an increasingly important position in modern energy systems, but they still have the problems of discontinuity and instability, which limit their further development. This problem can be effectively alleviated by the regulation of energy storage technologies. Among many energy storage technologies, with the advantages of its independent design of power and capacity, long cycle life, high safety, etc., flow batteries can be used in some scenarios such as grid regulation on the power generation side and photovoltaic regulation on the user side, which is a kind of energy storage technology with great potential. However, the energy density of current flow batteries is generally low, for example, the energy density of all-vanadium flow batteries is only 30-40 Wh L⁻¹, which leads to relatively high electrolyte and system costs. Bromine ions have typically high solubility and relatively good electrochemical activity, which is a kind of positive active material with development potential. Bromine has abundant valence changes and theoretically can achieve multi electron transfer reactions, but the current utilization of bromine is only a single-electron transfer reaction between bromide ions and bromine monomers, and further electron-loss products are rather unstable, which limits its energy density.

### SUMMARY

To solve the above technical problems, the present invention aims to provide a method of preparing a bromine-based two-electron transfer electrolyte and its application in a flow battery. The present invention realizes a two-step two-electron transfer reaction, on the basis of single electron transfer between a bromide ion and a bromine monomer, by reacting the bromine monomer (after further loss of electrons) with the amino group on the amine compound with an electron-withdrawing group to generate a N-Bromo amines. This reaction broadens the reversible valence reaction of bromine from a single-electron reaction with negative monovalent to zero valence to a two-electron reaction with negative monovalent to positive monovalent, resulting in a doubling of the energy density. And this reaction can flexibly adjust solubility and voltage according to the different types of amino compounds. The flow batteries assembled using this two-electron reacting electrolyte can achieve high energy density, charging and discharging efficiency and stability with low cost, and can be applied in distributed energy storage systems with high energy density requirements. To achieve the above objectives, the technical solutions adopted in the present invention are as follows:
A flow battery electrolyte, where the electrolyte comprises bromine ions, an amine compound with an electron-withdrawing group at the ortho-position of an amino group, and a supporting electrolyte; when the amine compound with an electron-withdrawing group at the ortho-position of an amino group itself carries an ion-conducting group, the electrolyte does not comprise a supporting electrolyte.

Optionally, the electrolyte consists of bromine ions, an amine compound with an electron-withdrawing group at the ortho-position of an amino group, and a supporting electrolyte; when the amine compound with an electron-withdrawing group at the ortho-position of an amino group itself carries an ion-conducting group, the electrolyte does not comprise a supporting electrolyte.

Optionally, the bromine ions, and the amine compound with an electron-withdrawing group at the ortho-position of an amino group are used as a positive active material; the bromine ions, and the amine compound with an electron-withdrawing group at the ortho-position of an amino group undergo an oxidation and/or a reduction reaction during a cycling process of a flow battery.

Further, the bromine ions include one or more of hydrobromic acid, sodium bromide, potassium bromide, zinc bromide, ammonium bromide, zinc bromide and other salts containing bromide ion; preferably hydrobromic acid and zinc bromide.

Further, a concentration of the bromine ions is from 0.1 mol L⁻¹ to 5 mol L⁻¹, preferably from 1 mol L⁻¹ to 2 mol L⁻¹.

The concentration of the bromine ions is selected from any value or a range value determined by any two of 0.1 mol L⁻¹, 0.5 mol L⁻¹, 1 mol L⁻¹, 2 mol L⁻¹, 2.5 mol L⁻¹, 3 mol L⁻¹, 3.5 mol L⁻¹, 4 mol L⁻¹, 4.5 mol L⁻¹, 5 mol L⁻¹.

Further, the amine compound includes one or more of sulfamic acid, sodium sulfamate, potassium sulfamate, ammonium sulfamate, sulfonamide, succinimide, acetamide, phthalimide, saccharin, sodium pyrrolidonecarboxylate, barbituric acid, dicyandiamide, methanesulfonamide, cyanuric acid, trifluoromethanesulfonamide, and 2-aminopyrimidine; preferably one or more of sulfamic acid, sodium sulfamate, potassium sulfamate, and ammonium sulfamate.

Further, a concentration of the amine compound is from 0.1 mol L⁻¹ to 5 mol L⁻¹, preferably from 1 mol L⁻¹ to 2 mol L⁻¹.

The concentration of the amine compound is selected from any value or a range value determined by any two of 0.1 mol L⁻¹, 0.5 mol L⁻¹, 1 mol L⁻¹, 1.2 mol L⁻¹, 1.4 mol L⁻¹, 1.6mol L⁻¹, 1.8 mol L⁻¹, 2 mol L⁻¹, 2.5 mol L⁻¹, 3 mol L⁻¹, 3.5 mol L⁻¹, 4 mol L⁻¹, 4.5 mol L⁻¹, 5 mol L⁻¹.

The concentration of the amine compound depends on its own solubility, for example, the solubility of sodium sulfamate can reach 8 mol L⁻¹.

Further, the supporting electrolyte includes one or more of sulfuric acid, acetic acid, glycolic acid, bromoacetic acid, potassium chloride, potassium acetate, sodium chloride, sodium acetate, and sodium sulfate; preferably one or two of sulfuric acid and potassium chloride, which are used in acidic and neutral environments, respectively. When the amino compound itself can ionize conductive ions, it can also be used without adding another supporting electrolytes, such as sodium sulfamate, which can be used directly as a supporting electrolyte.

Further, a concentration of the supporting electrolyte is from 0.1 mol L⁻¹ to 4 mol L⁻¹, preferably from 1 mol L⁻¹ to 2 mol L⁻¹.

The concentration of the supporting electrolyte is selected from any value or a range value determined by any two of 0.1 mol L⁻¹, 0.5 mol L⁻¹, 1 mol L⁻¹, 1.2 mol L⁻¹, 1.4 mol L⁻¹, 1.6mol L⁻¹, 1.8 mol L⁻¹, 2 mol L⁻¹, 2.5 mol L⁻¹, 3 mol L⁻¹, 3.5 mol L⁻¹, 4 mol L⁻¹.

The electrolyte is an aqueous solution comprising the bromine ions, the amine compound with an electron-withdrawing group at the ortho-position of an amino group, and the supporting electrolyte.

According to another aspect of the present application, there is provided a use of the above flow battery electrolyte as a positive electrolyte in a flow battery.

Further, a negative electrolyte active material of the flow battery comprises one or more of titanium sulfate, hexafluorotitanic acid, titanium bromide, cadmium sulfate, cadmium bromide, cadmium chloride, lead chloride, stannous chloride, zinc bromide, and zinc acetate; preferably one or more of titanium sulfate, cadmium sulfate, and zinc bromide.

According to another aspect of the present application, there is provided a flow battery, where the flow battery contains a positive electrode, a negative electrode, and a separator for separating the positive and negative electrodes; a chamber on the positive electrode side is filled with a positive electrolyte, and a chamber on the negative electrode is filled with a negative electrolyte; the positive electrolyte comprises at least one of the above electrolytes.

An active material of the negative electrolyte is one or more of titanium sulfate, hexafluorotitanic acid, titanium bromide, cadmium sulfate, cadmium bromide, cadmium chloride, lead chloride, stannous chloride, zinc bromide, and zinc acetate.

Specifically, the flow battery contains a metal terminal plate, a current collector, a flow frame, an activated carbon felt or a graphite felt as an electrode, a separator for separating the positive and negative electrodes, and a rubber gasket for sealing; a chamber between the positive current collector and the separator is filled with a positive graphite felt or carbon felt and a positive electrolyte, and a chamber between the negative current collector and the separator is filled with a negative graphite felt or carbon felt and a negative electrolyte. The electrolyte is circulated between the chamber and a storage tank via one of a magnetic centrifugal pump or a peristaltic pump, and the positive electrolyte is optionally non-circulating and sealed in the chamber as a single flow battery.

Specifically, the metal terminal plate may be any one selected from the group consisting of an aluminum alloy plate, a stainless steel plate, and other acid corrosion-resistant metal plate, preferably a stainless steel plate; the current collector may be any one selected from the group consisting of a graphite plate, and a titanium plate, and the positive current collector is preferred to be a titanium plate; and the separator may be any one selected from the group consisting of a perfluorosulfonic acid membrane, a porous polyolefin membrane, a sulfonated polyether ether ketone membrane, and a polybenzimidazole membrane; preferably a perfluorosulfonic acid membrane.

In the electrolyte, an amine compound with an electron-withdrawing group at the ortho-position of an amino group is used to react with bromine, which is charged to a positive valence, so as to form an amine-bromine compound, such that positive-valence bromine is stabilized, and a reversible two-electron transfer reaction from bromine ions to amine-bromine compounds is achieved. The amine compounds have different solubilities and produce different voltages depending on their substituent groups, and thus have extensive adjustability and applicability for use in acidic, neutral, and weak alkaline flow battery systems. Flow batteries assembled with the electrolyte prepared using this reaction has the advantages of low cost and high energy density, and can achieve a longer cycle life and higher battery efficiency.

Beneficial effects that can be produced by the present application include:
1) The flow battery electrolyte provided in the present application utilizes the characteristic of amino compounds with an electron-withdrawing group at the ortho-position of the amino group, being able to ionize hydrogen ions and make themselves negatively charged, can stabilize the positive-valence bromine intermediate product after bromine monomers further lose electrons, so that the original single-electron transfer reaction between bromine ions and bromine monomers can be extended to a two-electron transfer reaction between bromine ions and amine-bromine compounds. As a result, the theoretical capacity and theoretical energy density of the battery can be improved exponentially. Calculated with 4 mol L⁻¹ bromine salt, the electron concentration can reach 8 mol L⁻¹, the battery capacity can reach 214 Ah L⁻¹, with zinc as the negative electrode, the discharge voltage can reach 1.6V, and the theoretical energy density can reach 342 Wh L⁻¹.
2) The flow battery assembled with the flow battery electrolyte provided in the present application can achieve lower battery polarization and higher voltage efficiency. Compared to the bromine-based flow battery, the resistance of the electrolyte does not increase significantly after the addition of the amino compounds, and thus it is possible to achieve a voltage efficiency similar to traditional bromine-based flow batteries.
3) The amine-bromine compounds formed by the amino compounds and the positive-valence bromine in the present application can decrease the positive valency of the bromine due to the presence of the conjugate structure, thereby improve its stability. Thus, the flow battery assembled with the flow battery electrolyte provided in the present application can realize high Coulombic efficiency, and the Coulombic efficiency without complexing agent is on par with that of conventional bromine-based flow batteries with complexing agent, reaching 98%-99%. For some amine-bromine compounds, the molecular volume is relatively large, and thus the requirement for the membrane is relatively low.
4) The amino compounds used in the present application have extensive adjustability and applicability. Theoretically, the ortho-position of the amino group is an electron-withdrawing group, i.e., they have the ability to bind positive-valence bromine, such as carbonyls and acyls; the linking groups at other positions are not restricted, thus allowing a wide range of choices. In addition, depending on the type of amino compounds, it can have different solubility and exhibit different electrode potentials, and can be used in acidic, neutral, and weak alkaline environments, so it can be matched to different negative electrodes.
5) Some of the amino compounds used in the present application have the characteristic of being cheap and easy to obtain, and thus the electrolyte prepared has the advantage of low price. For example, sulfamic acid is an inorganic solid acid which is widely used in other fields and is a common chemical raw material.
6) The electrolyte used in the present application reduces the production of Br₂, thereby reducing their corrosiveness, diffusivity, and volatility; there is no need to add bromine complexing agents to the electrolyte, and the requirements for battery sealing and the materials are not so strict. Since the reaction between bromine and amino compounds is a two-electron reaction, the amount of bromine used is half that of conventional bromine-based flow batteries at the same electron concentration, thus reducing the corrosion of materials and harm to the environment. In addition, in a weak alkaline environment, the conversion of bromide ions to bromine monomers may be difficult to carry out due to the disproportionation of bromine, and is replaced by a one-step, two-electron-transfer reaction from bromide ions directly to amine-bromine compounds, thus avoiding bromine monomer production directly.

### BRIEF DESCRIPTION OF THE DRAWINGS

Fig. 1 shows a chart of Coulomb efficiency for 100 cycles of the batteries of Example 1 and Comparative Example 1.
Fig. 2 shows a chart of Coulomb efficiency for 100 cycles of the batteries of Example 1 and Comparative Example 2.
Fig. 3 shows a chart of Coulomb efficiency for 100 cycles of the batteries of Example 1 and Comparative Example 3.
Fig. 4 shows a chart of Coulomb efficiency for 100 cycles of the batteries of Example 1 and Comparative Example 4.
Fig. 5 shows a chart of voltage efficiency for 100 cycles of the batteries of Example 1 and Comparative Example 5.
Fig. 6 shows a chart of Coulomb efficiency for 100 cycles of the batteries of Example 1 and Comparative Example 6.
FIG. 7 shows the charge/discharge curves of the flow battery of Example 1.

### DETAILED DESCRIPTION OF THE EMBODIMENTS

The present application will be described in detail below with reference to embodiments, but the present disclosure is not limited to these embodiments. Unless otherwise specified, the raw materials in the embodiments of the present application were purchased commercially. Battery performance testing is done with Neware charge/discharge instruments.

### Example 1

### Assembly of a flow battery:

The positive and negative electrolyte have the same composition, both consisting of 1mol L⁻¹ of zinc bromide, 2 mol L⁻¹ of sodium sulfamate, and 2 mol L⁻¹ of potassium acetate. Among them, zinc bromide provides both zinc ions used for the negative electrode and bromine ions needed for the positive electrode.

### Assembly of single cells:

The structure of the single cell includes terminal plates, graphite plates for current collector, 6×8 cm carbon felt for the positive and negative electrodes, perfluorosulfonic acid separator using Nafion membranes, flow frames, silicone pads, terminal plates, positive and negative electrolyte storage tank, and pumps as well as piping.

### Battery test:

Constant-current charging and discharging mode was adopted, the flow rate of the electrolyte was 60 mL min⁻¹, the charging and discharging current was 40 mA cm⁻², the charging cut-off voltage was 2.0 V, and the discharging cut-off voltage was 0.1 V. The average values of the Coulombic efficiency CE, the voltage efficiency VE, and the energy efficiency EE for the first 100 cycles of the charging and discharging cycles were detected.

The flow batteries assembled in other Examples and Comparative examples only differ in electrolyte composition from Example 1, as shown in Table 1.

**Table 1. Composition and Performance of batteries in Different Examples and Comparative examples**

| (Comparative) examples | negative active material (mol L⁻¹) | Bromine source (mol L⁻¹) | Amine compounds (mol L⁻¹) | Supporting electrolytes (mol L⁻¹) | Energy density (WhL⁻¹) | CE | VE | EE |
|---|---|---|---|---|---|---|---|---|
| Example 1 | ZnBr₂ 1.0 | ZnBr₂ 1.0 | Sodium sulfamate 2.0 | potassium acetate 2.0 | 172 | 98.89 | 85.15 | 84.20 |
| Example 2 | CdSO₄ 1.0 | ZnBr₂ 1.0 | Sodium sulfamate 2.0 | potassium acetate 2.0 | 160 | 98.81 | 84.55 | 83.54 |
| Example 3 | ZnBr₂ 1.0 | ZnBr₂ 1.0 | Acetamide 2.0 | potassium acetate 2.0 | 172 | 98.55 | 83.53 | 82.61 |
| Example 4 | ZnBr₂ 1.0 | ZnBr₂ 1.0 | Sodium sulfamate 2.0 | - | 172 | 98.75 | 83.86 | 82.81 |
| Example 5 | ZnBr₂ 1.0 | KBr 2.0 | Sodium sulfamate 2.0 | potassium acetate 2.0 | 172 | 98.86 | 85.02 | 84.06 |
| Comparative example 1 | ZnBr₂ 1.0 | ZnBr₂ 1.0 | - | potassium acetate 2.0 | 172 | 81.15 | 78.36 | 63.59 |
| Comparative example 2 | ZnBr₂ 1.0 | ZnBr₂ 1.0 | Glycine 2.0 | potassium acetate 2.0 | 172 | 85.23 | 79.15 | 67.46 |
| Comparative example 3 | ZnBr₂ 1.0 | ZnBr₂ 1.0 | Ethanolamine 2.0 | potassium acetate 2.0 | 172 | 83.43 | 78.72 | 65.68 |
| Comparative example 4 | CdSO₄ 1.0 | --- | Sodium sulfamate 2.0 | potassium acetate 2.0 | 10 | 11.15 | 12.08 | 1.35 |
| Comparative example 5 | ZnBr₂ 1.0 | ZnBr₂ 1.0 | Acetamide 2.0 | - | 172 | 98.10 | 72.16 | 70.79 |
| Comparative example 6 | ZnBr₂ 1.0 | ZnBr₂ 1.0 | - | potassium acetate 2.0 | 86 | 93.17 | 83.14 | 77.47 |

From the battery performance data of Examples 1-5, it can be seen that when the electrolyte contains appropriate negative active materials, bromine sources required for the positive electrode, amino compounds containing electron-withdrawing groups, and supporting electrolytes, the flow battery can achieve higher energy density, Coulombic efficiency, voltage efficiency, and energy efficiency.

As can be seen from Example 1 and Example 2, under the condition that the electrolyte required for the positive electrode remains unchanged, the negative active material can be selected from various sources, such as using both Zn²⁺/Zn and Cd²⁺/Cd as the negative redox pair can achieve high performance. Compared to the Cd²⁺/Cd negative redox pair, the Zn²⁺/Zn negative redox pair has a lower standard electrode potential, and thus the voltage of the battery is higher, and the voltage efficiency and energy efficiency of the battery will be higher.

As can be seen from Example 1 and Example 3, the batteries are all able to achieve high performance within the range of selected amino compounds. The ortho position of the amino of acetamide is a carbonyl group, the ortho position of the amino of sodium sulfamate is a sulfonic acid group, both of which are electron-withdrawing groups, and thus both can undergo a two-electron transfer reaction with bromine, resulting in a higher energy density. Since the electronic structure of each amino compound may differ, its ability to bind with bromine may also differ, thus showing different battery efficiencies.

As can be seen from Example 1 and Example 4, when the amino compound itself can ionize conductive ions, a high battery efficiency can be obtained without addition of a supporting electrolyte. For example, the sodium sulfamate itself is capable of ionizing sodium ions and thus has the function of conducting ions. Of course, compared to adding supporting electrolytes, not adding supporting electrolytes will lead to a decrease in the conductivity of the solution and a slight decrease in the voltage efficiency of the battery.

As can be seen from Example 1 and Example 5, the batteries are all able to achieve high performance within the selected range of bromine ion sources. Compared to Example 5, Example 1 uses zinc bromide as both a bromine source and a negative active material, and thus is able to save raw materials and reduce a portion of the cost.

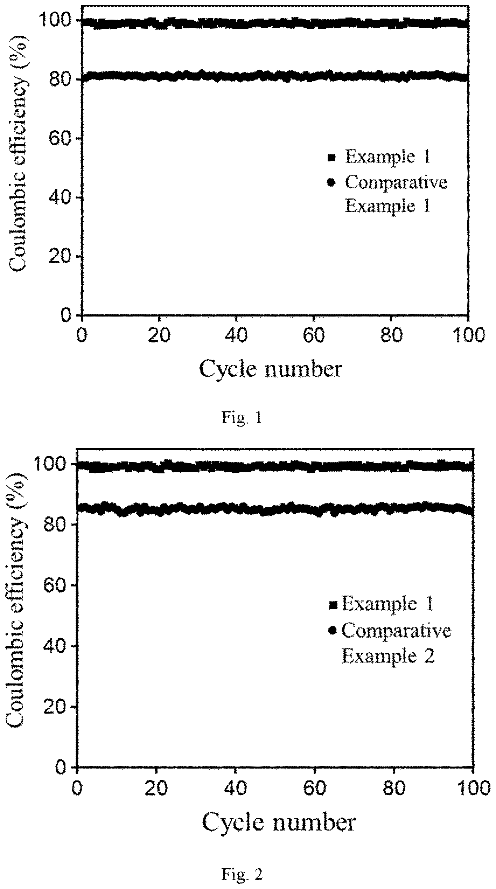

Fig. 1 shows a chart of Coulomb efficiency for 100 cycles of the batteries of Example 1 and Comparative Example 1. As can be seen from the chart, the Coulombic efficiency of the battery of Comparative Example 1 is only 81% under the same energy density conditions, due to the absence of the addition of the amino compounds. This is mainly due to the fact that in the absence of the addition of the selected amino compounds, bromine can only undergo reversible single electron reactions, further charging will be charged to hypobromous or bromous acid, of which the reversibility is relatively poor, side reactions may occur, and thus it will lead to a decrease in the Coulombic efficiency.

Fig. 2 shows a chart of Coulomb efficiency for 100 cycles of the batteries of Example 1 and Comparative Example 2. As can be seen from the chart, although glycine was added as an amino compound in Comparative Example 2, the ortho position of the amino of glycine is methylene group, an electron-donating group, which cannot undergo reversible two electron transfer reaction with bromine. Therefore, similar to the reaction that occurs in Comparative Example 1, it will lead to lower Coulombic efficiency.

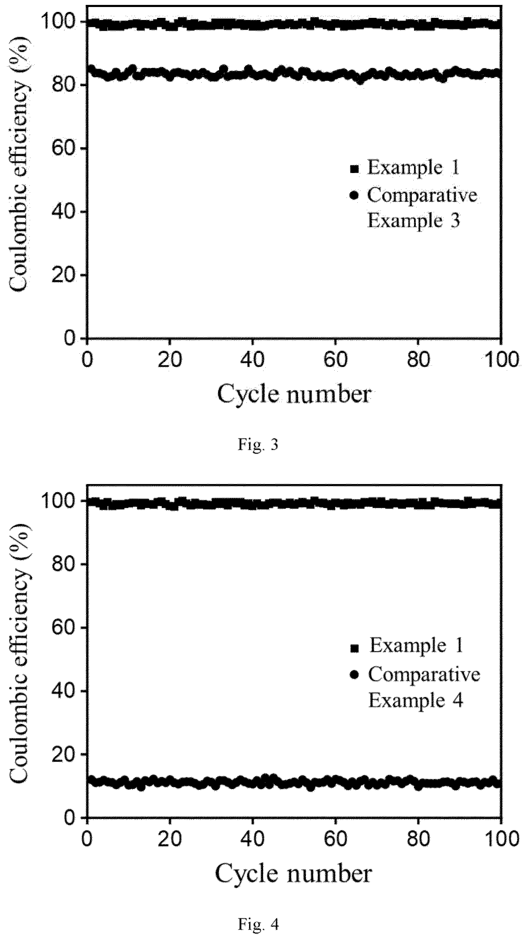

Fig. 3 shows a chart of Coulomb efficiency for 100 cycles of the batteries of Example 1 and Comparative Example 3. As can be seen from the chart, although ethanolamine was added as an amino compound in Comparative Example 3, the ortho position of the amino of ethanolamine is alcohol hydroxyl group, an electron-donating group, which cannot undergo reversible two electron transfer reaction with bromine. Therefore, similar to the reaction that occurs in Comparative Example 2, it will lead to lower Coulombic efficiency.

Fig. 4 shows a chart of Coulomb efficiency for 100 cycles of the batteries of Example 1 and Comparative Example 4. As can be seen from the chart, due to the absence of a bromine source in Comparative Example 4, the Coulombic efficiency is very low. This indicates that amino compounds themselves do not have redox activity and require binding with bromine to undergo reversible electron transfer reactions. Otherwise, only oxygen evolution reactions can occur at the positive electrode, resulting in extremely low Coulombic efficiency.

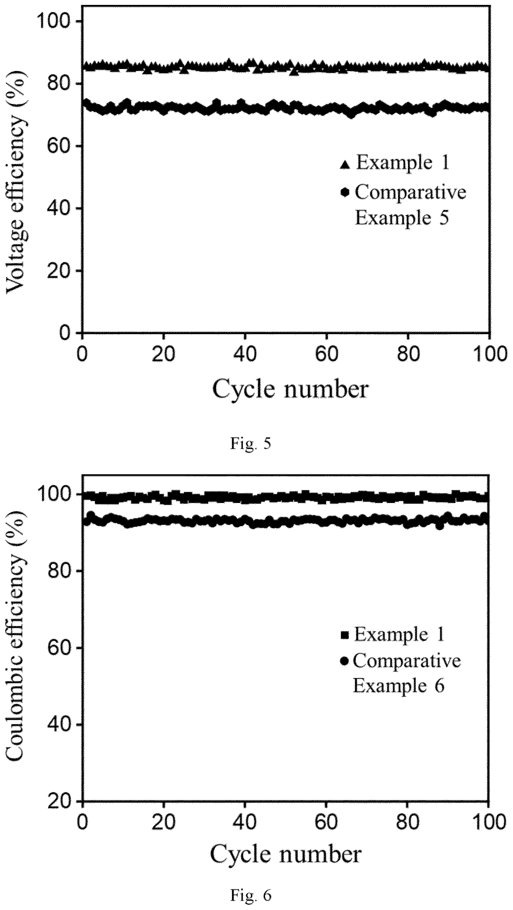

Fig. 5 shows a chart of voltage efficiency for 100 cycles of the batteries of Example 1 and Comparative Example 5. As can be seen from the chart, due to the absence of supporting electrolytes in Comparative Example 5, and the fact that acetamide itself cannot provide conductive ions, the conductivity of the solution is lower, resulting in lower voltage efficiency.

Fig. 6 shows a chart of Coulomb efficiency for 100 cycles of the batteries of Example 1 and Comparative Example 6. No selected amino compound was added in Comparative Example 6, and only a single electron reaction could occur, resulting in an energy density half lower than the two-electron reaction in Example 1. Moreover, due to the volatilization and diffusion of bromine monomer in the later stage of charging, the Coulombic efficiency of the battery is lower.

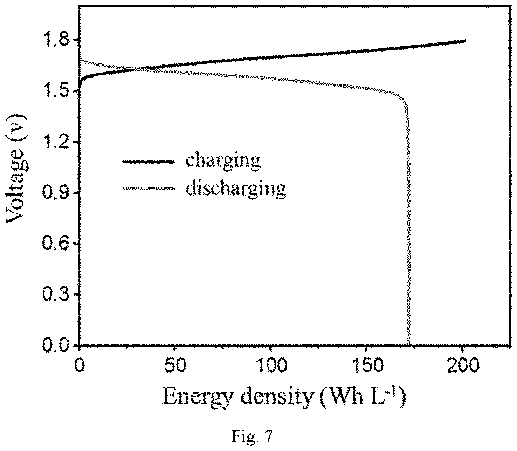

FIG. 7 shows the charge/discharge curves of the flow battery of Example 1. As can be seen from the curves, the battery can achieve an energy density of 172 Wh L⁻¹, corresponding to the two-electron transfer reaction of bromine. At this energy density, the battery can still achieve high Coulombic efficiency, voltage efficiency, and energy efficiency.

In summary, using the electrolyte composition of the present application, the two-electron transfer reaction of bromine can be realized, so that the flow battery can operate stably and efficiently at a high energy density.

In addition, the above embodiments are merely some of the embodiments of the present application, and do not limit the present application in any form. Although the present application is disclosed above with the preferred embodiments, the present application is not limited thereto. Some changes or modifications made by any technical personnel familiar with the profession using the technical content disclosed above without departing from the scope of the technical solutions of the present application are equivalent to equivalent implementation cases and fall within the scope of the technical solutions.

## Claims

1. A flow battery electrolyte, wherein the electrolyte comprises bromine ions, an amine compound with an electron-withdrawing group at the ortho-position of an amino group, and a supporting electrolyte; when the amine compound with an electron-withdrawing group at the ortho-position of an amino group itself carries an ion-conducting group , the electrolyte does not comprise a supporting electrolyte.

2. The flow battery electrolyte according to claim 1, wherein the electrolyte consists of bromine ions, an amine compound with an electron-withdrawing group at the ortho-position of an amino group, and a supporting electrolyte; when the amine compound with an electron-withdrawing group at the ortho-position of an amino group itself carries an ion-conducting group, the electrolyte does not comprise a supporting electrolyte.

3. The flow battery electrolyte according to claim 1, wherein the bromine ions, and the amine compound with an electron-withdrawing group at the ortho-position of an amino group are used as a positive active material;
the bromine ions, and the amine compound with an electron-withdrawing group at the ortho-position of an amino group undergo an oxidation and/or a reduction reaction during a cycling process of a flow battery.

4. The flow battery electrolyte according to claim 1, wherein the bromine ions include one or more of hydrobromic acid, sodium bromide, potassium bromide, zinc bromide, ammonium bromide, zinc bromide and other salts containing bromide ion.

5. The flow battery electrolyte according to claim 1, wherein the amine compound includes one or more of sulfamic acid, sodium sulfamate, potassium sulfamate, ammonium sulfamate, sulfonamide, succinimide, acetamide, phthalimide, saccharin, sodium pyrrolidonecarboxylate, barbituric acid, dicyandiamide, methanesulfonamide, cyanuric acid, trifluoromethanesulfonamide, and 2-aminopyrimidine.

6. The flow battery electrolyte according to claim 1, wherein the supporting electrolyte includes one or more of sulfuric acid, acetic acid, glycolic acid, bromoacetic acid, potassium chloride, potassium acetate, sodium chloride, sodium acetate, and sodium sulfate.

7. The flow battery electrolyte according to claim 1, wherein the electrolyte is an aqueous solution comprising the bromine ions, the amine compound with an electron-withdrawing group at the ortho-position of an amino group, and the supporting electrolyte;
wherein a concentration of the bromine ions is from 0.1 mol L⁻¹ to 5 mol L⁻¹, preferably from 1 mol L⁻¹ to 2 mol L⁻¹; a concentration of the amine compound is from 0.1 mol L⁻¹ to 5 mol L⁻¹, preferably from 1 mol L⁻¹ to 2 mol L⁻¹; a concentration of the supporting electrolyte is from 0.1 mol L⁻¹ to 4 mol L⁻¹, preferably from 1 mol L⁻¹ to 2 mol L⁻¹.

8. A use of the flow battery electrolyte of any one of claims 1-7 as a positive electrolyte in a flow battery.

9. The use according to claim 8, wherein a negative electrolyte active material of the flow battery comprises one or more of titanium sulfate, hexafluorotitanic acid, titanium bromide, cadmium sulfate, cadmium bromide, cadmium chloride, lead chloride, stannous chloride, zinc bromide, and zinc acetate.

10. A flow battery, wherein the flow battery contains a positive electrode, a negative electrode, and a separator for separating the positive and negative electrodes; a chamber on the positive electrode side is filled with a positive electrolyte, and a chamber on the negative electrode is filled with a negative electrolyte; the positive electrolyte comprises at least one of the electrolytes according to any one of claims 1-7;
an active material of the negative electrolyte is one or more of titanium sulfate, hexafluorotitanic acid, titanium bromide, cadmium sulfate, cadmium bromide, cadmium chloride, lead chloride, stannous chloride, zinc bromide, and zinc acetate.
